# EUROPÄISCHE PATENTSCHRIFT

(11) **EP 0 434 910 B1**
(45) Veröffentlichungstag und Bekanntmachung des Hinweises auf die Patenterteilung: **08.12.1993**
(21) Anmeldenummer: 90117994.5
(22) Anmeldetag: 19.09.1990
(51) Int. Cl.: B60H 1/24

(54) **Luftleitdüse zum Belüften des Fahrgastraumes eines Kraftwagens**
Air nozzle for ventilating the passenger compartment of a motor vehicle
Distributeur d'air de ventilation pour l'habitacle d'un véhicule automobile

(30) Priorität: 18.12.1989 DE 3941699
(43) Veröffentlichungstag der Anmeldung: 03.07.1991
(73) Patentinhaber: MERCEDES-BENZ AG, 70327 Stuttgart (DE)
(72) Erfinder: Kalt, Hans-Peter, D-7036 Schönaich (DE); Lüders, Michael, D-7046 Gäufelden (DE); Schmid, Wolfgang, D-7044 Ehningen (DE)

(56) Entgegenhaltungen:
- DE-A- 2 031 986
- DE-A- 3 731 104
- DE-B- 1 604 300
- US-A- 2 847 928
- PATENT ABSTRACTS OF JAPAN, Band 12, Nr. 356 (M-745)[3203], 26. September 1988; & JP-A-63 112 210 (Honda Motor Co., Ltd) 17-05-1988

## Beschreibung

Die Erfindung betrifft eine Luftleitdüse zum Belüften des Fahrgastraumes eines Kraftwagens, die im Verlauf eines längsdurchströmten Kanales von einer Kanalwand aufgenommen wird und mit einer verstellbare Lamellen aufweisenden Jalousie versehen ist, wobei die Luftaustrittsmenge durch ein um eine parallel zur Luftaustrittsöffnung und quer zur Luftströmungsrichtung verlaufende Achse visierartig verschwenkbares Verschlußglied bis zum völligen Luftabschluß veränderbar ist.

Eine derartige Luftleitdüse, bei der das Verschlußglied zur Reduzierung der Luftaustrittsmenge vor die Jalousie geschwenkt wird, ist durch die DE-A- 37 31 104 bekannt. Die optisch nicht ansprechende Abdeckung der Lamellen bewirkt, daß durch das Verschlußglied eine mehr oder minder starke Luftstrahlablenkung nach unten eintritt, so daß es zum Erhalt einer gleichbleibenden Richtung des Luftstromes notwendig ist, die im wesentlichen waagerecht ausgerichteten Lamellen jeweils neu einzustellen, wobei die Stellung der Lamellen keinen Rückschluß auf die tatsächliche Ausblasrichtung zuläßt. Der in den Luftkanal ragende Bereich des sich in Schließstellung befindlichen Verschlußgliedes verursacht hohe Strömungsverluste, wobei insbesondere bei hohen Luftgeschwindigkeiten auch unangenehme Luftgeräusche auftreten können.

Es ist Aufgabe der Erfindung, eine Luftleitdüse gemäß dem Oberbegriff des Anspruchs 1 zu schaffen, bei der die Luftausströmrichtung durch die Stellung des Verschlußgliedes nicht beeinflußt wird. Weiter soll erreicht werden, daß bei geöffnetem Verschlußglied ein Höchstmaß an Luft zur Jalousie gelangt, während bei geschlossenem Verschlußglied die Strömungsverluste möglichst gering gehalten und Luftgeräusche selbst bei hohen Luftgeschwindigkeiten vermieden werden.

Diese Aufgabe wird durch die kennzeichnenden Merkmale des Patentanspruches 1 gelöst.

In weiterer Ausgestaltung der Erfindung wird der Düsenabschnitt von einer auf den Innenrand der Luftleitdüse aufgesetzten Hutze gebildet, über bzw. unter der das Verschlußglied verschwenkt wird. Der Düsenabschnitt kann dabei an den Innenrand angeformt sein.

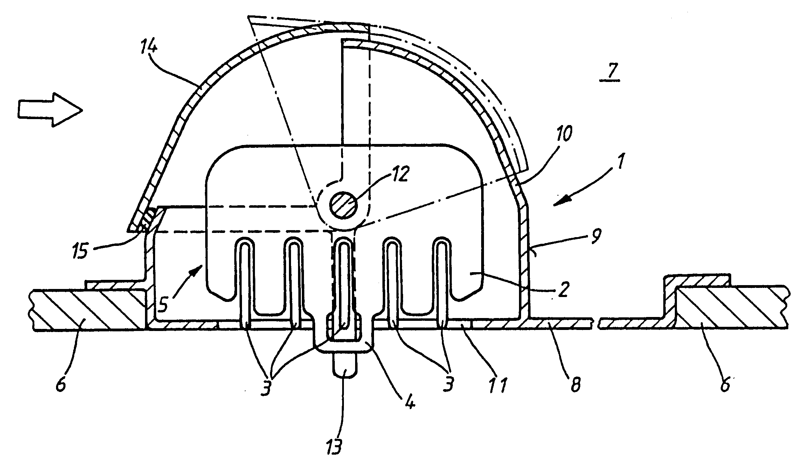

Ein Ausführungsbeispiel der Erfindung wird nachfolgend anhand der Zeichnung näher erläutert.

Eine Luftleitdüse 1 mit einer aus senkrecht zueinander angeordneten Lamellen 2 und 3 bestehenden, bezüglich der Luftaustrittsrichtung durch ein Betätigungsglied 4 verschwenkbaren Jalousie 5, wird von der unteren Kanalwand 6 eines nicht näher dargestellten, im Dachbereich eines Omnibusses verlaufenden Kanals 7 aufgenommen. Die den einzelnen Sitzen zugeordnete Luftleitdüse 1 kann einen Bestandteil einer Baueinheit bilden, die neben einer Beleuchtungseinrichtung noch einen Lautsprecher und Schalter aufweisen kann. Von einer Grundplatte 8 der Luftleitdüse 1 steht ein die Jalousie 5 zum Kanalinnern umschließender Innenrand 9 ab, an der ein Düsenabschnitt 10 in Form einer Hutze angeformt ist.

Um eine parallel zur Luftaustrittsöffnung 11 der Luftdüse 1 und quer zur durch einen Pfeil angegebenen Luftströmungsrichtung verlaufenden Achse 12 ist mittels einer angedeuteten Handhabe 13 ein Verschlußglied 14 verschwenkbar, das von einer in ausgezogenen Linien dargestellten Schließstellung, in der der Düsenabschnitt 10 und das Verschlußglied 14 eine Kuppel bilden, in eine in strichpunktierten Linien angedeutete Offenstellung überführbar ist. In der Schließstellung liegt das Verschlußglied 14 an einer Dichtung 15 an, so daß ein Luftaustritt aus der Luftdüse 1 verhindert wird, wobei durch die strömungsgünstige Kuppelform die Strömungsverluste klein gehalten und Luftgeräusche auch bei hohen Luftgeschwindigkeiten vermieden werden.

Wird das Verschlußglied 14 in Richtung seiner Offenstellung verschwenkt, wobei das Verschlußglied 14 auch entgegen der Darstellung sich unterhalb des Düsenabschnitts 10 bewegen könnte, so wird ein mehr oder weniger großer Luftstrom abgeschöpft und unter strömungsgünstiger Umlenkung zur Jalousie geleitet.

## Patentansprüche

1. Luftleitdüse (1) zum Belüften des Fahrgastraumes eines Kraftwagens, die im Verlauf eines längsdurchströmten Kanales (7) von seiner dem Fahrgastraum zugekehrten Kanalwand (6) aufgenommen wird und mit einer verstellbare Lamellen (2,3 ) aufweisenden Jalousie (5) versehen ist, wobei die Luftaustrittsmenge durch ein um eine parallel zur Luftaustrittsöffnung (11) und quer zur Luftströmungsrichtung verlaufende Achse (12) visierartig verschwenkbares Verschlußglied (14) bis zum völligen Luftabschluß veränderbar ist,
**dadurch gekennzeichnet,**
daß das Verschlußglied (14) zusammen mit einem ortsfesten Düsenabschnitt (10) eine Kuppel bildet, die sich beim Verschwenken des Verschlußgliedes (14) aus der Schließstellung heraus zum Luftstrom hin öffnet und daß das Verschlußglied (14) ggf. zusammen mit dem Düsenabschnitt (10) eine Luftschöpfeinrichtung bildet, die die Luft zur Jalousie (5) hin umlenkt.

2. Luftleitdüse nach Anspruch 1,
**dadurch gekennzeichnet,**
daß der Düsenabschnitt (10) von einer auf den Innenrand ((9) der Luftleitdüse (1) aufgesetzten Hutze gebildet wird, über bzw. unter der das Verschlußglied (14) verschwenkt wird.

3. Luftleitdüse nach Anspruch 2,
**dadurch gekennzeichnet,**
daß der Düsenabschnitt (10) an dem Innenrand (9) angeformt ist.

## Claims

1. An air guide nozzle (1) for ventilating the passenger compartment of a motor vehicle and accommodated in the wall (6) of a duct (7) directed at the passenger compartment and through which there is a longitudinal flow, said nozzle being provided with a shutter (5) which has adjustable slats (2, 3), the quantity of emerging air being variable to the extent of complete exclusion of air by a closure member (14) adapted to pivot in the manner of a sighting device about an axis (12) extending parallel with the air outlet orifice (11) and transversely to the direction of air flow, characterised in that the closure member (14) forms together with a rigid nozzle portion (10) a dome which opens towards the air flow when the closure member (14) pivots out of the closed position and in that the closure member (14), possibly together with the nozzle portion (10), forms an air scoop device which deflects the air to the shutter (5).

2. An air guide nozzle according to claim 1, characterised in that the nozzle portion (10) is formed by a hood placed on the inner rim (9) of the air guide nozzle (1) and above or below which the closure member (14) is pivoted.

3. An air guide nozzle according to claim 2, characterised in that the nozzle portion (10) is integrally formed on the inner rim (9).

## Revendications

1. Distributeur d'air (1), pour la ventilation de l'habitacle d'un véhicule automobile, supporté, le long d'un canal (7) parcouru longitudinalement par un courant d'air, par sa paroi de canal (6) tournée vers l'habitacle et pourvue d'une jalousie (5) présentant des lamelles (2, 3) réglables, la quantité d'air sortant pouvant être modifiée, jusqu'à atteindre la fermeture totale du passage d'air, au moyen d'un organe d'obturation (14) susceptible de pivoter, à la façon d'une visière, autour d'un axe (12) s'étendant parallèlement à l'ouverture de sortie d'air (11) et transversalement par rapport à la direction de l'écoulement de l'air, caractérisé en ce que l'organe de fermeture (14) forme, conjointement avec une section de buse (10) localement fixe, une coupole, s'ouvrant lors du pivotement de l'organe d'obturation (14), depuis la position de fermeture, en vue de laisser passer un courant d'air et en ce que l'organe d'obturation (14) forme, le cas échéant, conjointement avec le tronçon de buse (10), un dispositif de distribution d'air, déviant l'air sur la jalousie.

2. Distributeur d'air selon la revendication 1, caractérisé en ce que le tronçon de buse (10) est formé par un auvent appliqué sur la bordure intérieure (9) du distributeur d'air (1), sur lequel, respectivement sous lequel pivote l'organe de fermeture (14).

3. Distributeur d'air selon la revendication 2, caractérisé en ce que la section de buse (10) est formée d'un seul tenant sur la bordure intérieure (9).
